Europäisches Patentamt

European Patent Office

Office européen des brevets

(11) Veröffentlichungsnummer: **0 142 649**
A2

(12) # EUROPÄISCHE PATENTANMELDUNG

(21) Anmeldenummer: **84110408.6**

(22) Anmeldetag: **31.08.84**

(51) Int. Cl.⁴: **H 02 M 7/5395**
**H 02 M 1/088**

(30) Priorität: **15.09.83 DE 3333408**

(43) Veröffentlichungstag der Anmeldung:
**29.05.85 Patentblatt 85/22**

(84) Benannte Vertragsstaaten:
**AT DE SE**

(71) Anmelder: **Siemens Aktiengesellschaft**
**Berlin und München Wittelsbacherplatz 2**
**D-8000 München 2(DE)**

(72) Erfinder: **Müller, Manfred**
**Thumenberger Weg 5**
**D-8500 Nürnberg(DE)**

(72) Erfinder: **Klausecker, Karl, Dipl.-Ing.**
**Killingerstrasse 42**
**D-8520 Erlangen(DE)**

(54) **Verfahren und Vorrichtung zur Ansteuerung der Schalter eines mehrphasigen Pulswechselrichters, insbesondere eines Transistorwechselrichters.**

(57) Ein Pulswechselrichter, insbesondere ein Transistorwechselrichter, soll ein möglichst symmetrisches System von Ausgangsspannungen U,R bis U,T mit z.B. trapezartiger Kurvenform erzeugen. Hierzu werden mehrere Referenzspannungen U1, U2, U3 unterschiedlicher Kurvenform erzeugt, wobei jeweils ein Abschnitt einer Ausgangsspannung mit einem Abschnitt einer Referenzspannung deckungsgleich ist. Diese Referenzspannungen werden sowohl mit einer hochfrequenten Tastfrequenz, wie der invertierten Tastfrequenz pulsbreitenmoduliert, und die pulsbreitenmodulierten Referenzspannungen bzw. die mit der inversen Tastfrequenz modulierten inversen Referenzspannungen werden jeweils abschnittsweise auf die Steuerleitungen der Wechselrichterschalter durchgeschaltet. Dabei werden alle zur Erzeugung des Ansteuersignals für einen Wechselrichterausgang verwendeten Referenzspannungen und Bauteile auch für die Erzeugung der Ansteuersignale der anderen Ausgänge verwendet, so daß ohne einen aufwendigen Abgleich ein symmetrisches System von Ansteuerspannungen entsteht.

FIG 2

EP 0 142 649 A2

0142649

SIEMENS AKTIENGESELLSCHAFT                Unsere Zeichen:
Berlin und München                       VPA 83 P 3 3 0 0 E

Verfahren und Vorrichtung zur Ansteuerung der Schalter
eines mehrphasigen Pulswechselrichters, insbesondere
eines Transistorwechselrichters

Die Erfindung geht aus von einem Verfahren zur Bildung von
pulsbreitenmodulierten Ansteuerspannungen für die Schalter
eines Pulswechselrichters mit mehreren Ausgängen, insbesondere eines Transistorwechselrichters, mit den Merkmalen des Oberbegriffes des Anspruches 1. Die Erfindung betrifft ferner eine entsprechende Vorrichtung mit den
Merkmalen des Oberbegriffes des Anspruches 6.

Bei einem Pulswechselrichter wird jeder Ausgang über ein
Schalterpaar alternierend an die beiden Pole einer Eingangsgleichspannung gelegt, wobei das Verhältnis der jeweiligen Schaltzeiten einen Mittelwert für die Ausgangsspannung an diesem Wechselrichterausgang bestimmt. Man
kann dabei der betreffenden Ausgangsspannung eine Sollkurve vorbestimmter Kurvenform vorgeben, indem man die
Schließzeiten des einen Schalters bzw. die Öffnungszeiten
des anderen Schalters entsprechend den Pulsdauern einer
mit einer hochfrequenten Taktfrequenz pulsbreitenmodulierten, der Sollkurve proportionalen Referenzspannung
steuert.

Im allgemeinen wird für die verschiedenen Ausgänge des
Wechselrichters ein symmetrisches System von Ausgangsspannungen gefordert. Insbesondere sollen unterschiedliche
Kurvenformen oder Gleichanteile vermieden werden. Es ist
dabei üblich, die Schaltimpulse für die jeweils auf einen
Wechselrichterausgang arbeitenden Schalter durch Pulsbreitenmodulation einer eigenen, diesem Schalter zugeordneten
Referenzspannung zu bilden, wozu ein möglichst streng

Kbl 2 Rch / 8.9.1983

symmetrisches System von Referenzspannungen erforderlich ist, d.h. die Referenzspannungen müssen entsprechend der Phasenzahl des Wechselrichters äquidistant verteilt sein und gleiche Kurvenform aufweisen.

Werden als Wechselrichterschalter z.B. Thyristorschalter verwendet, so ist zu beachten, daß zwischen dem Schließen des einen und dem Öffnen des anderen Schalters gewisse Schonzeiten eingehalten werden müssen. Dadurch ist die Höhe der Tastfrequenz beschränkt und die Ableitung der Schaltbefehle aus den durch Pulsbreitenmodulation gebildeten Ansteuerspannungen der Ventile erfordert zusätzliche Maßnahmen. Dies entfällt, wenn als Wechselrichterschalter Schalttransistoren verwendet werden, die mit sehr hohen Taktfrequenzen (z.B. 1 bis 6 kHz) geschaltet werden können. Bei derart hohen Schaltfrequenzen muß aber die Symmetrie des Ansteuerspannungssystems besonders streng eingehalten werden, da bereits kleine Unsymmetrien zu großen Gleichanteilen führen können. Es müssen daher ungleich schnelle Übergänge zwischen dem "1"-Zustand und dem "0"-Zustand der für die Pulsbreitenmodulation der Referenzspannungen verwendeten Komparatoren und andere Bauteiltoleranzen sorgfältig aufeinander abgeglichen werden, wodurch in der Regel ein zeitraubendes Justieren an sechs und mehr Trimmpotentiometern erforderlich wird.

Für die vom Wechselrichter gespeisten Verbraucher sind meist sinusförmige Ströme angestrebt. Es ist bekannt, daß diese sinusförmigen Ströme häufig, z.B. bei einem dreiphasigen Wechselrichter, unter besonders guter Ausnützung des Wechselrichters erzeugt werden können, wenn Ausgangsspannungen mit trapezartiger Kurvenform erzeugt werden. In diesem Fall müssen also als Ansteuerspannungen für die Wechselrichterschalter pulsbreitenmodulierte symmetrische Trapezspannungen erzeugt werden.

Der Erfindung liegt die Aufgabe zugrunde, auf möglichst einfache Weise ein möglichst streng symmetrisches System von pulsbreitenmodulierten Ansteuerspannungen eines Puls- wechselrichters, insbesondere eines Transistorwechselrich- ters mit trapezförmigen Ausgangsspannungen, zu erzeugen.

Diese Aufgabe wird gelöst durch ein Verfahren mit den Merkmalen des Anspruchs 1.

Die Erfindung wird zwar anhand des bevorzugten Anwendungsbeispiels (3-phasiger Transistor-Pulswechselrichter mit trapezförmigen Ausgangsspannungen) erläutert, jedoch ist sie auch in anderen Fällen, z.B. bei einem mehrphasigen Wechselrichter und anderen Spannungsformen anwendbar.

Gemäß der Erfindung werden zwar ebenfalls mehrere periodische, nach Maßgabe des für die Ausgangsspannungen des Wechselrichters vorgegebenen symmetrischen Systems von trapezartigen Sollkurven gewählte Referenzspannungen mit einer hochfrequenten Tastfrequenz pulsbreitenmoduliert und auf die Steuerleitungen der Wechselrichterschalter geschaltet. Jedoch wird die Ansteuerspannung der auf einen Wechselrichterausgang arbeitenden Schalter nicht jeweils aus einer eigenen trapezförmigen Referenzspannung durch Pulsbreitenmodulation erzeugt, vielmehr werden für alle Schalter jeweils die gleichen Referenzspannungen verwendet, wobei die Kurvenformen der Referenzspannungen voneinander unterschieden sind und auch die Anzahl der Refe- renzspannungen nicht unmittelbar durch die Anzahl der Wechselrichterausgänge (Wechselrichterphasen) bestimmt ist. Vielmehr richten sich Anzahl und Kurvenform der Referenzspannungen nach anderen Kriterien, die aus den für die Ausgangsspannung gewählten Sollkurven folgen.

So kann z.B. die positive Halbwelle einer trapezartigen Sollkurve in drei Abschnitte (eine ansteigende Flanke, ein Plateau und eine absteigende Flanke) zerlegt werden. Als Referenzspannungen werden eine ansteigende Rampenfunktion, eine Konstantspannung und eine absteigende Rampenfunktion erzeugt, so daß jeder Abschnitt dieser Sollkurve deckungsgleich mit einem Abschnitt einer dieser Referenzspannungen ist. Für die negative Halbwelle können jeweils die inversen Referenzspannungen verwendet werden. Durch geeignete Wahl der Periode dieser Referenzspannungen läßt sich erreichen, daß zu jedem Abschnitt dieser Sollkurve auch in jeder Sollkurve für die anderen Ausgangsspannungen jeweils phasengleiche Abschnitte (d.h. Abschnitte mit dem gleichen Phasenabstand gegenüber dem jeweiligen Sollkurven-Nulldurchgang) auftreten, die jeweils deckungsgleich mit derselben Referenzspannung sind.

Alle Referenzspannungen werden nun mit der selben Tastfrequenz pulsbreitenmoduliert und die pulsbreitenmodulierten Spannungen werden abschnittsweise so zu den gewünschten Ansteuerspannungen zusammengesetzt, daß binäre Steuersignale mit der jeweils angestrebten Trapezform entstehen.

Hierzu wird auf die Steuerleitung der auf den betreffenden Wechselrichterausgang arbeitenden Schalter jeweils diejenige pulsbreitenmodulierte Referenzspannung (oder inverse Referenzspannung) geschaltet, die jeweils im zur aktuellen Phasenlage der betreffenden Sollkurve gehörenden Phasenabschnitt deckungsgleich mit der Sollkurve ist. Entsprechend der Phasendifferenz zwischen den äquidistantphasenverschobenen (d.h. "symmetrischen") Sollkurven werden zwar die pulsbreitenmodulierten Referenzkurven jeweils zu unterschiedlichen Zeiten auf die unterschiedlichen Ansteuerleitungen durchgeschaltet; da aber alle Ansteuersignale unter Verwendung der selben Bauteile aus den selben Referenzspannungen gebildet werden, sind durch Bauteiletoleranzen bedingte Unsymmetrien in allen Phasen gleich. Gleichanteile in den Ausgangsspannungen bzw. den Maschinenströmen können dann nicht mehr entstehen. Ein Abgleich der Bauteile ist selbst bei extremen Unsymmetrien nicht mehr erforderlich.

Dabei ist es vorteilhaft, wenn die Amplitude aller Referenzspannungen durch eine gemeinsame Amplitudensteuergröße und die Frequenz aller Referenzspannungen, soweit sie überhaupt frequenzveränderlich sind, durch eine gemeinsame Frequenzsteuergröße vorgegeben wird. Ferner werden vorteilhaft die Referenzspannungen so gewählt, daß die Eckpunkte der deckungsgleichen Abschnitte durch Schnittpunkte der Referenzspannungen gegeben sind.

Bevorzugt werden zur Bildung der pulsbreitenmodulierten Referenzspannungen die Schnittpunkte der Referenzspannung mit einer hochfrequenten Tastspannung (insbesondere in Sägezahnform oder Dreieckform) und zur Bildung der pulsbreitenmodulierten inversen Referenzspannungen die Schnittpunkte der jeweiligen Referenzspannung mit der invertierten Tastspannung gebildet. In einem Abschnitt der ersten Halbperiode können dann die jeweils durch Pulsbreitenmodulation mit der nichtinvertierten Tastspannung entstandenen Impulse für die Ansteuerung verwendet werden, während im entsprechenden Abschnitt der anderen Halbperiode auf die Steuerleitungen solche Impulse durchgeschaltet werden, die durch Inversion und Pulsbreitenmodulation mit der invertierten Tastspannung entstehen.

Eine diesem Verfahren entsprechende Vorrichtung ist im Anspruch 6 angegeben. Vorteilhafte Weiterbildungen des Verfahrens und der Vorrichtung sind in den Unteransprüchen gekennzeichnet.

Anhand eines Ausführungsbeispieles und dreier Figuren wird die Erfindung näher erläutert. Hierbei zeigt die Figur 1 den Verlauf der Referenzspannungen, der Tastspannung und der Ansteuer- bzw. Ausgangsspannungen, Fig. 2 stellt den Aufbau einer entsprechenden Vorrichtung dar und Fig. 3 dient zum Verständnis der Bildung der pulsbreitenmodulierten inversen Referenzspannungen.

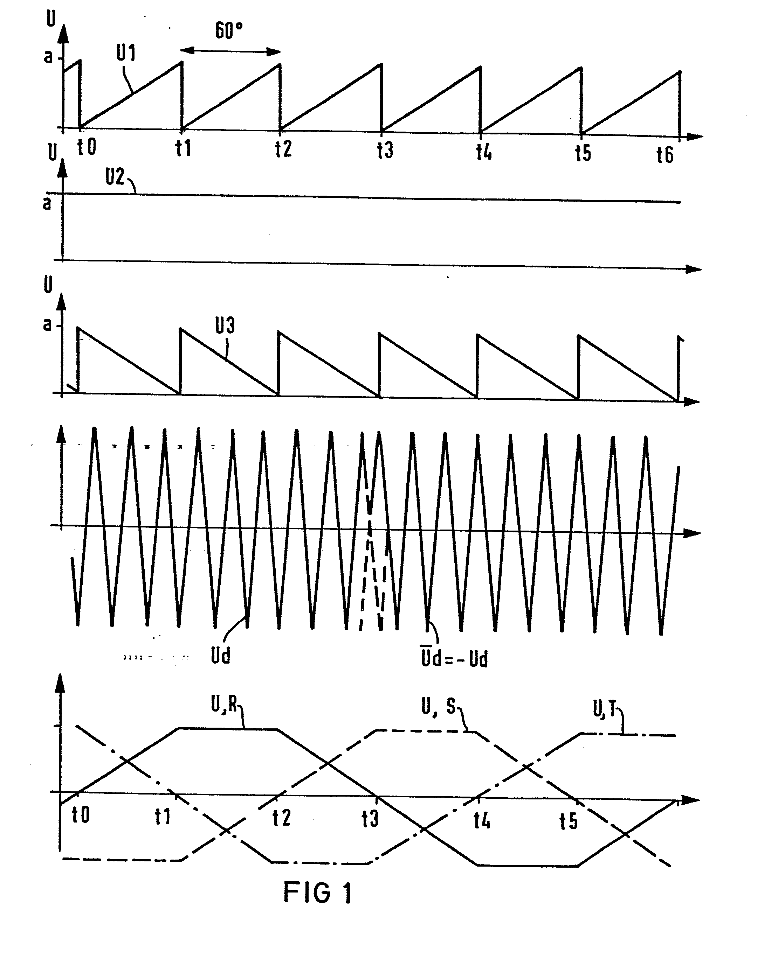

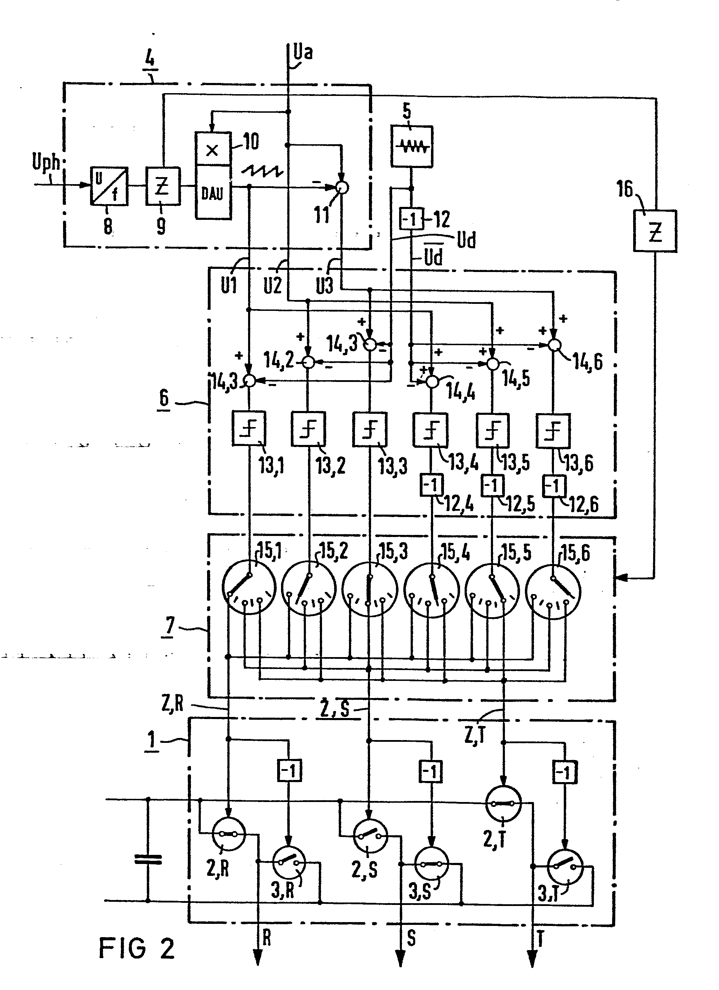

Im untersten Diagramm der Fig. 1 sind die Sollkurven der trapezförmigen Ausgangsspannungen U,R; U,S und U,T an den Ausgängen R,S und T des dreiphasigen Pulswechselrichters 1 nach Fig. 2 gezeigt. Jeder dieser Ausgänge ist über einen Schalter 2R; 2S und 2T mit dem einen Pol und einen entsprechenden Schalter 3R; 3S und 3T mit dem anderen Pol einer Eingangsgleichspannung verbunden. Die auf den Eingang R arbeitenden Schalter werden über ein binäres Ansteuersignal Z,R betätigt, wobei während des Pulses Z,R = 1 der Schalter 2,R geschlossen, dagegen durch einen Puls Z,R = $\overline{1}$ der Schalter 3,R geschlossen wird. Entsprechendes gilt für die auf die Ausgänge S und T arbeitenden Schalter 2,S; 3,S bzw. 3,T, die vom Ansteuersignal Z,S bzw. Z,T betätigt werden. Zur Erzeugung der Ausgangsspannungen U,R bzw. U,S bzw. U,T müssen die entsprechenden Ansteuersignale als pulsbreitenmodulierte Spannungen erzeugt werden, wobei die unmodulierte Kurvenform dieser Spannungen durch die Form der Sollkurven gegeben ist.

Zur Erzeugung dieser Ansteuerspannungen ist ein von einer Amplitudensteuergröße Ua und einer Frequenzsteuergröße Uph gesteuerter Referenzspannungsgenerator 4 vorgesehen, der mehrere nach den Erfordernissen der für die Ausgangsspannungen vorgegebenen Trapezform gewählte Referenzspannungen erzeugt. Ein Tastspannungsgenerator 5 erzeugt ferner eine hochfrequente Tastspannung, beispielsweise 1 bis 6 kHz.

Die vom Referenzspannungsgenerator 4 gebildeten Referenzspannungen U1, U2 und U3 werden nun in einem Pulsbreitenmodulator 6 mit der Tastspannung moduliert und die dadurch erzeugten Impulse werden von einer Verteilerschaltung 7 als Ansteuerspannungen auf die Steuerleitungen der entsprechenden Ventilgruppen geschaltet.

Die vom Referenzspannungsgenerator 4 erzeugten Referenzspannungen sind dabei allen Ansteuerspannungen gemeinsam. Ihre Anzahl und ihre Kurvenform sind so gewählt, daß eine Halbperiode der Ausgangsspannung U,R abschnittsweise mit je einem Abschnitt einer anderen Referenzspannung praktisch (d.h. bis auf den Amplitudenfaktor) deckungsgleich ist. So ist die Sollkurve für U,R im Zeitintervall t0 bis t1, d.h. im Phasenbereich 0$^O$ bis 60$^O$, deckungsgleich mit der als erste Referenzspannung erzeugten Rampenfunktion U1 gemäß Fig. 1, deren Amplitude a durch die Amplitudensteuergröße $U_a$ vorgegeben ist. Die Periode dieser Rampenfunktion ist durch das 6-fache der Wechselrichterfrequenz gegeben.

Als zweite Referenzspannung U2 wird eine Konstantspannung mit dem Wert der Rampenamplitude a erzeugt. Diese Spannung U2 ist im nächsten Abschnitt der Halbschwingung von U,R (Zeitintervall t1 bis t2 bzw. Phasenabschnitt 60$^O$ ... 120$^O$) praktisch mit der Ausgangsspannung U,R deckungsgleich.

Als dritte Referenzspannung U3 wird die Differenz a - U1 der Konstantspannung und der Rampenfunktion U1 vorgegeben. Diese Referenzspannung U3 ist im nächsten Abschnitt der Halbperiode (Zeitintervall t2 ... t3 bzw. Phasenbereich 120$^O$ ... 180$^O$) mit U,R praktisch deckungsgleich.

Bei dieser Wahl der Anzahl und der Kurvenformen der Referenzspannungen ist gewährleistet, daß die erste Halbperiode der Ausgangsspannung U,S im ersten Zeitintervall

(t2 ... t3, Phasenlage 0$^o$ ... 60$^o$) mit einem entsprechenden Abschnitt der zugehörigen Referenzspannung U1 deckungsgleich ist. Entsprechendes gilt für die weiteren Phasenabschnitte 60$^o$ ... 120$^o$ und 120$^o$ ... 180$^o$ und die dazugehörigen Referenzspannungen U2 und U3. Im gleichen Sinne sind auch die phasengleichen Abschnitte der Ausgangsspannung U,T mit den Referenzspannungen jeweils abschnittsweise deckungsgleich.

Diese Referenzspannungen werden vom Generator 4 dadurch erzeugt, daß die Frequenzsteuerspannung einem Spannungsfrequenzumsetzer 8 zugeführt wird, dessen Impulse von einem mit der 6-fachen Wechselrichterfrequenz rücksetzbaren Zähler 9 gezählt werden. Dessen Zählerstand stellt somit eine digitalisierte Sägezahnspannung dar, die von einem von der Amplitudensteuerspannung Ua bzw. dem Rampenfunktions-Amplitudensollwert a beaufschlagten multiplizierenden Digital-Analog-Umsetzer 10 in die Referenzspannung U1 umgewandelt wird. Die Referenzspannung U1 und U2 können somit direkt um Ein- und Ausgang des multiplizierenden Umsetzers 10 abgegriffen werden, während die Referenzspannung U3 = a - U1 an einer Subtraktionsstelle 11 gebildet werden kann.

Der Tastspannungsgenerator 5 erzeugt eine Tastspannung Ud konstanter Hochfrequenz und konstanter Amplitude. Der Tastspannungsgenerator 5 kann dabei als Sägezahngenerator oder insbesondere als Dreiecksgenerator ausgebildet sein. Bei dem bevorzugten Ausführungsbeispiel nach Fig. 1 ist ferner vorgesehen, daß mittels eines Invertierers 12 am Generator 5 auch die invertierte Tastspannung $\overline{Ud}$ = - Ud abgegriffen wird.

Der Pulsbreitenmodulator 6 bildet nun die modulierten Referenzspannungen und die inversen modulierten Referenzspannungen. Nach Fig. 1 sind hierzu sechs Komparatoren 13,1 ... 13,6 vorgesehen, wobei die Referenzspannungen und die Tastspannung den drei ersten Komparatoren 13,1 bis 13,3 aufgeschaltet sind, während zur Bildung der pulsbreitenmodulierten inversen Referenzspannungen die Referenzspannungen U1, U2, U3 zusammen mit der invertierten Tastspannung den anderen Komparatoren 13,4 bis 13,6 aufgeschaltet sind. Gemäß Fig. 1 sind hierzu Komparatoren des gleichen Typs vorgesehen, d.h. die Komparatoren erzeugen z.B. jeweils dann einen Impuls, wenn die Differenz ihrer Eingangsspannungen positiv ist. Zur Bildung der pulsbreitenmodulierten inversen Referenzspannungen können hierbei den Komparatoren 13,4 bis 13,6 Invertierer 12,4 bis 12,6 nachgeschaltet sein.

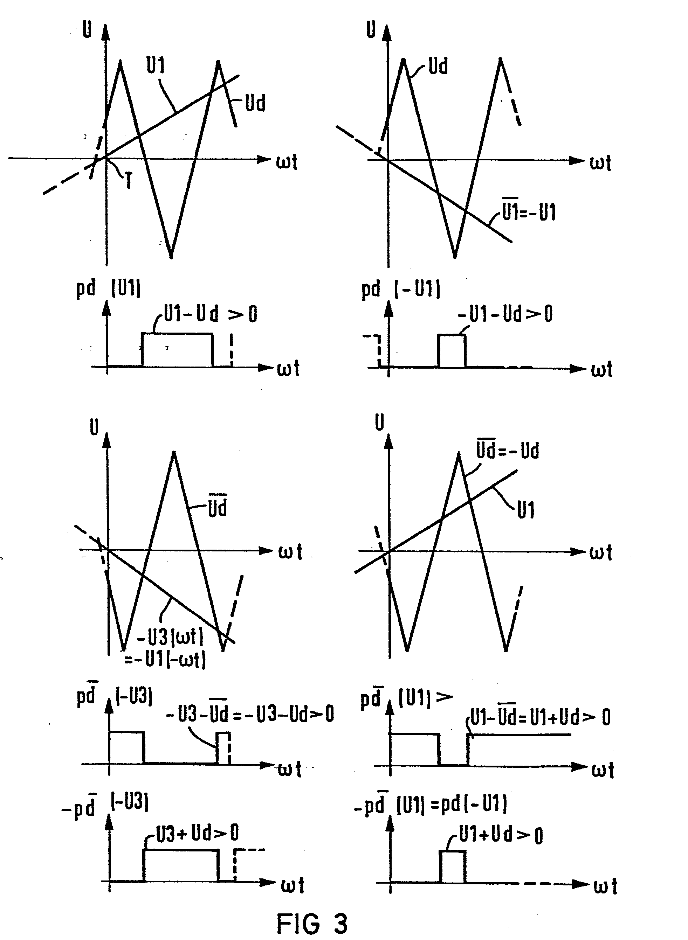

Bei der Bildung der pulsbreitenmodulierten inversen Referenzspannungen ist zu beachten, daß durch die Inversion einer pulsbreitenmodulierten Spannung eine Funktion entsteht, die etwas unterschiedlich ist von der Funktion, die durch Pulsbreitenmodulation der inversen Spannung entsteht. Dies ist in Fig. 3 dargestellt, bei der in den oberen Diagrammen die Tastspannung Ud einem Komparator unverändert zugeführt wird, jedoch durch Inversion der Referenzspannung von U1 auf $\overline{U1}$ = -U1 übergegangen wird. Dabei zeigt sich, daß das Binärsignal pd (U1), das durch Pulsbreitenmodulation der Spannung U1 mit der Tastspannung Ud entsteht, eine Impulspause aufweist, die nicht nur in der Phasenlage, sondern auch in ihrer Breite unterschiedlich ist von Phasenlage und Breite des Impuls-peaks der Funktion pd ($\overline{U1}$), die durch Pulsbreitenmodulation der invertierten Referenzspannung $\overline{U1}$ = - U1 mit der gleichen Tastspannung Ud entsteht. Diese pulsbreitenmodulierte inverse Referenzspannung pd (-U1) kann, wie der Vergleich der rechts in Fig. 3 untereinander gezeigten Diagramme beweist, auf verschiedene Weise durch Invertierer am Ein- und/oder Ausgang des entsprechenden Komparators ge - bildet werden, jedoch zeigt sich im Gegensatz zu den linken Diagrammen, daß die Eingangsspannungen Ul und Ud
des Komparators dabei stets mit gleichem Vorzeichen bewertet sind. Es entsteht daher die Frage, auf welche Weise .  . in den Phasenbereichen $180^{o} - 240^{o}$ bzw. $300^{o} - 360^{o}$
der Sollkurven die für die Ansteuerspannungen benötigten
inversen Referenzspannungen pulsbreitenmoduliert werden.
Geht man davon aus, daß die Ansteuerspannungen symmetrisch um die Sollkurven-Nulldurchgänge liegen sollen,
d.h. es soll für die pulsbreitenmodulierte Sollkurve
U,R gelten: U,R (T + $\omega$t) = -U,R (T - $\omega$t), so folgt wegen
Ul (T - $\omega$t) = U3 (T + $\omega$t), daß die inverse Referenzspannung U3 mit der inversen Tastspannung $\overline{U}d$ zu modulieren
ist, wie der Vergleich der linken Diagramme in Fig. 3
zeigt.

Beim bevorzugten Ausführungsbeispiel werden daher die
pulsbreitenmodulierten Referenzspannungen entsprechend
den Schnittpunkten der Referenzspannungen mit der Tastspannung selbst, dagegen die pulsbreitenmodulierten inversen Referenzspannungen entsprechend den Schnittpunkten der Referenzspannungen mit der invertierten Tastspannung erzeugt. Entsprechend enthält der Pulsbreitenmodulator 6 sechs verschiedene Komparatoren 13,1 bis 13,6,
die alle an einem Eingang von der Tastspannung beaufschlagt sind. Zur Bildung der pulsbreitenmodulierten
Referenzspannungen ist dem anderen Eingang des ersten
Komparators 13,1 bzw. zweiten Komparators 13,2 bzw.
dritten Komparators 13,3 die erste Referenzspannung
(Rampenspannung Ul) bzw. die zweite Referenzspannung
(Kosntantspannung U2) bzw. die dritte Referenzspannung
(Differenz U3 = U2 - Ul) aufgeschaltet. Zur Bildung der
pulsbreitenmodulierten inversen Referenzspannung sind
den anderen Komparatoren Invertierer (12,4 bis 12,6 und
14,4 bis 14,6) vor- oder nachgeschaltet, und dem anderen
Eingang des vierten Komparators 13,4 bzw. fünften Komparators 13,5 bzw. sechsten Komparators 15,6 ist die

erste Referenzspannung (Rampenspannung U1) bzw. die zweite Referenzspannung (Konstantspannung U2) bzw. die dritte Referenzspannung (Differenz U3 = U2 - U1) aufgeschaltet.

Die vom Modulator 6 bereitgestellten Impulsfolgen werden nun von der Verteilerschaltung 7 als entsprechende Ansteuersignale Z,R bzw. Z,S bzw. Z,T so auf die Ansteuerleitungen der jeweils auf einen Ausgang R bzw. S bzw. T arbeitenden Schalter verteilt, daß jeweils die Impulsfolge, deren zugrunde liegende Referenzspannung im betreffenden Abschnitt deckungsgleich mit der den Schaltern und ihrer Ausgangsspannung zugrunde gelegten Sollkurve             ist, auf die zu diesem Ausgang gehörende Ansteuerleitung durchgeschaltet wird. Vom Nulldurchgang einer Sollspannung an wird also jeweils nacheinander die pulsbreitenmodulierte erste, zweite, dritte Referenzspannung und erste, zweite, dritte pulsbreitenmodulierte inverse Referenzspannung für die Dauer einer Rampenfunktions-Periode auf die Steuerleitung der dieser Sollspannung zugeordneten Schalter durchgeschaltet. Hierzu sind in Fig. 2 sechs Umschalter 15,1 bis 15,6 gezeigt, die jede Referenzspannung mit jeder Ansteuerspannung verbinden können. Die gezeigte Schalterstellung entspricht dabei dem Schaltzustand im Phasenbereich $0^o - 60^o$ der Sollkurve für U,R, in dem die pulsbreitenmodulierte erste Referenzspannung auf die Steuerleitung Z,R, die pulsbreitenmodulierte dritte Referenzspannung auf die Steuerleitung für Z,S und die pulsbreitenmodulierte inverse Referenzspannung U3 auf die Steuerleitung Z,T gelegt ist. Die Schalter 15,2 bzw. 15,4 bzw. 15,6 sperren hierbei die Ausgangssignale der entsprechenden Komparatoren. Gerätetechnisch werden die Umschalter durch elektronische Schalter, z.B. einem Multiplexer, realisiert, wobei das Selektionssignal (Schaltersteuersignal) der Schalter beispielsweise von einem Ringzähler 16 gebildet werden kann, der die Perioden der Rampenfunktion zählt. Mit jeder neuen Periode der Rampenfunktion wird jeder Umschalter um eine Stufe seiner sechs Schaltstellungen zyklisch weitergeschaltet.

Diese Schaltung gewährleistet, daß selbst bei einer hohen Schaltfrequenz mit einem minimalen Aufwand an Justierarbeit ein symmetrisches System von Ansteuerspannungen bzw. Ausgangsspannungen des Pulswechselrichters erzeugt wird.

Patentansprüche

1. Verfahren zur Bildung pulsbreitenmodulierter Ansteuerspannungen (Z,R bzw. Z,S bzw. Z,T) für die Schalter (2,R bis 3,T) eines Pulswechselrichters (1) mit mehreren Ausgängen (R, S, T), insbesondere eines Transistorwechselrichters, wobei mehrere periodische Referenzspannungen (U1, U2, U3), die nach Maßgabe eines symmetrischen Systems von Sollkurven (U,R bzw.U,S bzw. U,T) vorbestimmter Kurvenform für die Ausgangsspannungen an den Wechselrichterausgängen vorbestimmt werden, erzeugt, mit einer gegenüber der Frequenz der Sollkurven hochfrequenten Tastspannung $(u_\alpha)$ pulsbreitenmoduliert und auf die Steuerleitungen der Schalter durchgeschaltet werden, g e k e n n z e i c h - n e t   d u r c h   folgende Merkmale:

a) Anzahl und Kurvenform der Referenzspannungen (U1, U2, U3) sind so bestimmt, daß die Referenzspannungen jeweils eine unterschiedliche Kurvenform aufweisen, für alle Sollkurven (U,R; U,S; U,T) Abschnitte mit gleichem Phasenabstand vom jeweiligen Sollkurven-Nulldurchgang deckungsgleich mit Abschnitten der selben Referenzspannung sind, und jede Sollkurve aus deckungsgleichen Abschnitten der Referenzspannungen oder der inversen Referenzspannungen zusammensetzbar ist, und

b) auf die Steuerleitung (Z,R) der auf einen Wechselrichterausgang (R) arbeitenden Schalter (2,R bzw. 3,R) wird abschnittsweise jeweils die in diesem Abschnitt mit der Sollkurve (U,R) dieses Ausgangs (R) deckungsgleiche pulsbreitenmodulierte Referenzspannung oder pulsbreitenmodulierte inverse Referenzspannung durch-geschaltet.

0142649

2. Verfahren nach Anspruch 1, d a d u r c h   g e - k e n n z e i c h n e t ,   daß alle Referenzspannungen die gleiche, von einer Amplitudensteuergröße (Ua) vorgegebene Amplitude (a) und - soweit sie nicht konstant sind - die gleiche, von einer Frequenzsteuergröße (Uph) vorgegebene Frequenz aufweisen.

3. Verfahren nach Anspruch 1, d a d u r c h   g e - k e n n z e i c h n e t ,   daß die Referenzspannungen so gewählt sind, daß die Eckpunkte der deckungsgleichen Abschnitte mit Schnittpunkten (t0, t1, ... t6) der Referenzspannungen zusammenfallen.

4. Verfahren nach Anspruch 1, d a d u r c h   g e - k e n n z e i c h n e t ,   daß zur Bildung der pulsbreitenmodulierten Referenzspannungen die Schnittpunkte der Referenzspannungen (U1, U2, U3) mit der Tastspannung (Ud) und zur Bildung der pulsbreitenmodulierten inversen Referenzspannung die Schnittpunkte der Referenzspannung mit der inversen Tastspannung bestimmt werden.

5. Verfahren nach Anspruch 1 für einen dreiphasigen Pulswechselrichter, d a d u r c h   g e k e n n z e i c h - n e t ,   daß

a) drei Referenzspannungen (U1, U2, U3) vorgegeben werden, wobei die erste Referenzspannung (U1) eine Rampenfunktion mit einer durch eine Amplitudensteuergröße bestimmten Rampenamplitude (a) und der 6-fachen Frequenz der Sollkurven darstellt und als zweite Referenzspannung eine der Rampenamplitude gleiche Konstantspannung (U2 = a) und als dritten Referenzspannung die Differenz (U3 = U2 - U1) der beiden ersten Referenzspannungen erzeugt wird,

b) entsprechend den Schnittpunkten der Referenzspannunge
mit der Tastspannung (Ud) die pulsbreitenmodulierten
Referenzspannungen und entsprechend den Schnittpunkten
der Referenzspannungen mit der invertierten Tastspannung (U$\overline{d}$) die pulsbreitenmodulierten inversen Referenzspannungen erzeugt werden, und

c) vom Nulldurchgang einer Sollspannung an jeweils nacheinander die pulsbreitenmodulierte erste, zweite und
dritte Referenzspannung und die pulsbreitenmodulierte
inverse erste, zweite und dritte Referenzspannung für
die Dauer einer Rampenfunktionsperiode auf die Steuerleitung der dieser Sollspannung zugeordneten Schalter
durchgeschaltet wird.

6. Vorrichtung zur Bildung von pulsbreitenmodulierten Ansteuerspannungen für die Schalter (2,R bis 3,T) eines
Pulswechselrichters (1) mit mehreren Ausgängen (R, S, T),
insbesondere eines Transistorwechselrichters, wobei ein
Referenzspannungsgenerator (4) mehrere Referenzspannungen
erzeugt, die nach Maßgabe eines symmetrischen Systems von
Sollkurven (U, R bzw. U, S bzw. U, T) vorbestimmter Kurvenform für die Ausgangsspannungen an den verschiedenen
Wechselrichterausgängen vorgegeben sind, ein Tastspannungsgenerator (5) eine gegenüber der Frequenz der Sollkurven hochfrequente Tastspannung (Ud) bildet und einem
dem Referenzspannungsgenerator nachgeschalteten Pulsbreitenmodulator (6) eingibt und die pulsbreitenmodulierten
Referenzspannungen von einer Verteilerschaltung (7) auf
die Steuerleitungen (Z,R bzw. Z,S bzw. Z,T) durchgeschaltet werden, g e k e n n z e i c h n e t   d u r c h
folgende Merkmale:

a) der Referenzspannungsgenerator (4) erzeugt derartige
Referenzspannungen, daß sie jeweils eine unterschiedliche Kurvenform aufweisen, für alle Sollkurven Abschnitte mit gleichem Phasenabstand vom jeweiligen Sollkurven-Nulldurchgang deckungsgleich mit Abschnitten der selben Referenzspannung sind und jede Sollkurve aus deckungsgleichen Abschnitten der Referenzspannungen oder der inversen Referenzspannungen zusammensetzbar ist, und

b) die Verteilerschaltung (7) schaltet auf die Steuerleitung der auf einen Wechselrichterausgang arbeitenden Schalter jeweils die in diesem Abschnitt deckungsgleiche pulsbreitenmodulierte Referenzspannung oder pulsbreitenmodulierte inverse Referenzspannung durch.

7. Vorrichtung nach Anspruch 6 für einen Wechselrichter mit drei Ausgängen und trapezförmiger Kurvenform der Ausgangsspannungen, g e k e n n z e i c h n e t d u r c h folgende Merkmale:

a) der Referenzspannungsgenerator (4) enthält einen Spannungsumsetzer (8) für eine Frequenzsteuergröße (Uph) mit einem nachgeschalteten rücksetzbaren Zähler (9) und einem nachgeordneten, von einer durch eine Amplitudensteuergröße (Ua) mit einem Amplitudensollwert (a) beaufschlagten multiplizierenden Digital/Analogumsetzer (10), sowie eine Subtraktionsstelle (11) für den Amplitudensollwert und das Ausgangssignal des Digital/Analogumsetzers,

b) der Pulsbreitenmodulator (6) enthält sechs an einem Eingang von der Tastspannung beaufschlagte Komparatoren, wobei zur Bildung der pulsbreitenmodulierten Referenzspannungen die erste bzw. zweite bzw. dritte Referenzspannung jeweils dem anderen Eingang des ersten bzw. zweiten bzw. dritten Komparators aufgeschaltet ist und zur Bildung der pulsbreitenmodulierten inversen Referenzspannungen den anderen Komparatoren Invertierer (12 und 12,4 bis 12,6) vor und/oder nachgeschaltet sind und die erste bzw. zweite bzw. dritte Referenzspannung jeweils dem anderen Eingang des vierten bzw. fünften bzw. sechsten Komparators aufgeschaltet ist, und

c) die Verteilerschaltung 7 enthält einen Ringzähler (16) für die Perioden der Rampenfunktion und für jede Steuerleitung eine vom Ringzähler angesteuerte Schalteinrichtung (15,1 bis 15,6),die die Ausgänge der Komparatoren (13,1 bis 13,6) zyklisch nacheinander auf die Steuerleitung durchschaltet.

FIG 1

FIG 2

FIG 3